(19) Europäisches Patentamt / European Patent Office / Office européen des brevets

(11) **EP 4 401 227 B1**

(12) **EUROPEAN PATENT SPECIFICATION**

(45) Date of publication and mention
of the grant of the patent:
**22.04.2026 Bulletin 2026/17**

(21) Application number: **23852905.1**

(22) Date of filing: **07.08.2023**

(51) International Patent Classification (IPC):
$H01M\ 50/403^{(2021.01)}$   $H01M\ 50/451^{(2021.01)}$
$H01M\ 50/491^{(2021.01)}$   $H01M\ 50/426^{(2021.01)}$
$H01M\ 50/431^{(2021.01)}$   $H01M\ 50/443^{(2021.01)}$
$H01M\ 50/46^{(2021.01)}$   $H01M\ 10/0525^{(2010.01)}$
$H01M\ 10/052^{(2010.01)}$

(52) Cooperative Patent Classification (CPC):
H01M 10/052; H01M 10/0525; H01M 50/403;
H01M 50/417; H01M 50/426; H01M 50/431;
H01M 50/443; H01M 50/446; H01M 50/449;
H01M 50/451; H01M 50/46; H01M 50/489;
H01M 50/491; Y02E 60/10

(86) International application number:
**PCT/KR2023/011554**

(87) International publication number:
**WO 2024/035025 (15.02.2024 Gazette 2024/07)**

(54) **METHOD FOR MANUFACTURING A SEPARATOR FOR AN ELECTROCHEMICAL DEVICE, SEPARATOR AND ELECTROCHEMICAL DEVICE**

VERFAHREN ZUR HERSTELLUNG EINES SEPARATORS FÜR EINE ELEKTROCHEMISCHE VORRICHTUNG, SEPARATOR UND ELEKTROCHEMISCHE VORRICHTUNG

PROCÉDÉ DE FABRICATION D'UN SÉPARATEUR DE DISPOSITIF ÉLECTROCHIMIQUE, SÉPARATEUR ET DISPOSITIF ÉLECTROCHIMIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.08.2022 KR 20220100284**
**03.08.2023 KR 20230101473**

(43) Date of publication of application:
**17.07.2024 Bulletin 2024/29**

(73) Proprietor: **LG Energy Solution, Ltd.**
**Seoul 07335 (KR)**

(72) Inventors:
• **LEE, So Yeong**
**Daejeon 34122 (KR)**
• **BAE, Won Sik**
**Daejeon 34122 (KR)**
• **JEONG, So Mi**
**Daejeon 34122 (KR)**
• **LEE, Byeong Kyu**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
EP-A1- 3 848 997      CN-A- 103 730 619
CN-B- 103 730 619      KR-A- 20170 055 440
KR-A- 20170 132 753      KR-A- 20180 018 408
KR-A- 20190 110 288      KR-A- 20190 110 288
US-A1- 2015 303 003      US-A1- 2018 071 774
US-A1- 2018 315 971

## Description

Technical Field

The present disclosure relates to a method for manufacturing a separator for an electrochemical device, and a separator and an electrochemical device.

Background Art

An electrochemical device converts chemical energy into electrical energy using an electrochemical reaction. Recently, lithium secondary batteries, which have high energy density and voltage, long cycle life, and are usable in various fields, have been widely used.

A lithium secondary battery may include an electrode assembly made of a positive electrode, a negative electrode, and a separator arranged between the positive electrode, and the negative electrode, and the lithium secondary battery may be manufactured by receiving the electrode assembly in a case together with an electrolyte. The separator may include a porous coating layer which includes a polymer binder and inorganic particles on at least one surface of the porous substrate. Inorganic particles may be connected to other inorganic particles by a polymer binder to form an interstitial volume, and lithium ions can move through the interstitial volume. In addition to fixing the inorganic particles, the polymer binder can impart adhesive strength to the porous coating layer, and the porous coating layer can be attached to the porous substrate and electrodes, respectively.

Conventionally, a porous coating layer was formed with a slurry, which includes an oil-based dispersion medium and an oil-based polymer binder dispersed in the oil-based dispersion medium to secure excellent adhesive strength to a porous substrate and electrodes. However, there were problems in that it was difficult to control the distribution of the polymer binder and inorganic particles in the porous coating layer prepared with the slurry and that the adhesive strength (wet adhesive strength) when the separator was impregnated with an electrolyte was decreased. Recently, the wet adhesive strength has been improved using an aqueous dispersion medium and an aqueous polymer binder dispersed in the dispersion medium in a slurry for forming a porous coating layer, but a problem occurred in that the adhesive strength of the porous coating layer to the porous substrate and the electrodes was deteriorated, respectively. In order to solve the above problems, there has been introduced a method of applying a higher temperature and a higher pressure in the process of stacking electrode assemblies or pressing the stacked electrode assemblies, but there was a problem in that the air permeability and ionic conductivity of the separator were deteriorated or the porous substrate was damaged.

Accordingly, studies have been conducted on a method for manufacturing a separator that can improve the adhesive strength of a porous coating layer to electrodes and a porous substrate while maintaining the advantages of the porous coating layer including an aqueous polymer binder and physical properties of a separator.

KR 2019-0110288 A discloses a method for manufacturing a separator comprising the steps of performing a heat pretreatment on one or both sides of a polyolefin film, coating a coating composition on the heat pretreated polyolefin film, and curing the coating composition coated on the polyolefin film by a rolling drying method. The coating composition may be a slurry containing ceramic particles whose surface is modified by a vinyl siloxane-based surface modifier, a fluorine-based polymer, a crosslinkable polymer, and a solvent.

Disclosure

Technical Problem

An object of the present disclosure is to provide a method for manufacturing a separator for an electrochemical device, in which a porous coating layer, which includes a polymer binder and inorganic particles, has excellent adhesive strength to a porous substrate and to electrodes.

Technical Solution

An aspect of the present disclosure provides a method of manufacturing a separator for an electrochemical device, which includes (S1) preparing a coating slurry including a polymer binder, inorganic particles, and a dispersion medium; (S2) heating at least one surface of the porous substrate; and (S3) applying the coating slurry prepared in the step (S1) to at least one surface of the porous substrate heated in the step (S2) to thereby form a porous coating layer, wherein the porous coating layer includes an area, where the polymer binder is filmed, in at least a portion of the surface in contact with the porous substrate.

In the step (S1), the coating slurry is prepared at a temperature ($T_S$) higher than room temperature (25°C) and lower than the glass transition temperature ($T_g$) of the polymer binder.

In the step (S2), the porous substrate may be heated below the melting point ($T_m$) of the porous substrate.

In the step (S2), the porous substrate is heated to a temperature ($T_P$) higher than the glass transition temperature ($T_g$) of the polymer binder.

The method of manufacturing a separator for an electrochemical device can satisfy the following Equation (1):

$$\text{Equation (1)}$$

$$T_P - T_g \geq T_g - T_S$$

The area where the polymer binder is filmed may be 25 wt% to 50 wt% relative to the total weight of the porous coating layer produced in the method.

The thickness of the porous coating layer may be 1 $\mu$m to 20 $\mu$m.

In the step (S2), one or more areas may be heated among an area extending from an edge of the one surface by a predetermined thickness; a checkerboard-shaped area formed on the one surface; and a pattern area where the same shape is repeatedly formed on the one surface.

In the method for manufacturing a separator for an electrochemical device, step (S3) may include a step of drying the porous substrate, on which the coating slurry is applied, at a temperature of 50°C to 70°C for 5 to 10 minutes.

In the method for manufacturing a separator for an electrochemical device, in the step (S3), the drying step may be repeated 5 or more times.

In the method for manufacturing a separator for an electrochemical device, the polymer binder may be one or more particulate polymer binders selected from the group consisting of an acrylic-based polymer, a fluorine-based polymer, and a hybrid polymer of an acrylic-based polymer and a fluorine-based polymer.

In the method for manufacturing a separator for an electrochemical device, the fluorine-based polymer may be a homopolymer of vinylidene fluoride, a copolymer of vinylidene fluoride and a different polymerizable monomer, or a mixture of two or more thereof.

In the method for manufacturing a separator for an electrochemical device, the average particle diameter (D50) of the particulate polymer binder may be 100 nm to 700 nm, and the average particle diameter (D50) of the inorganic particle may be 300 nm to 700 nm.

In the method for manufacturing a separator for an electrochemical device, the polymer binder may include an acrylic-based polymer, a fluorine-based polymer, and a hybrid polymer of an acrylic-based polymer and a fluorine-based polymer.

Another aspect of the present disclosure provides a separator for an electrochemical device, the separator comprising

a porous substrate; and

a porous coating layer on at least one surface of the porous substrate, the porous coating layer comprising a polymer binder and inorganic particles;

wherein the porous coating layer comprises an area, where the polymer binder is filmed, in at least a portion of the surface in contact with the porous substrate;

the area where the polymer binder is filmed is 25 wt% to 50 wt% relative to the total weight of the porous coating layer; and

the polymer binder is one or more particulate polymer binders selected from an acrylic-based polymer, a fluorine-based polymer, and a hybrid polymer of an acrylic-based polymer and a fluorine-based polymer.

Still another aspect of the present disclosure provides an electrochemical device including a positive electrode, a negative electrode, and a separator interposed between the positive electrode and the negative electrode, wherein the separator is a separator for an electrochemical device according to the aspect above.

The electrochemical device may be a lithium secondary battery.

Advantageous Effects

The separator for an electrochemical device according to the present disclosure includes an area, where the polymer binder is filmed, in a porous coating layer, and the filmed area is formed from the surface where the porous coating layer contacts with the porous substrate to thereby provide improved peel strength compared to the conventional ones.

The separator for an electrochemical device produced by the method according to the present disclosure is preferably filmed in an amount of 25 wt% to 50 wt% relative to the total weight of the porous coating layer and thereby provides improved adhesive strength to electrodes compared to the conventional ones.

Description of Drawings

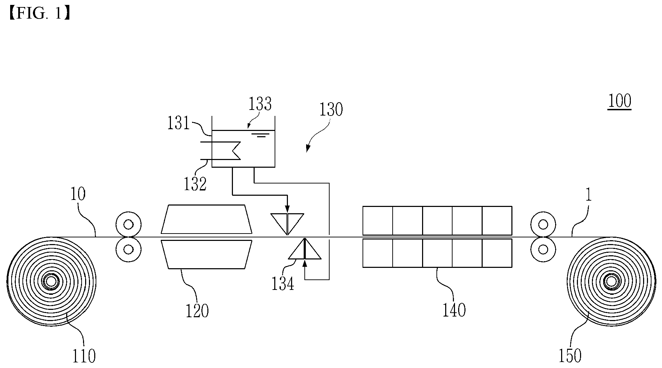

FIG. 1 is a conceptual diagram illustrating a process of manufacturing a separator for an electrochemical device according to an embodiment of the present disclosure.

Mode for Disclosure

Hereinafter, each component of the present disclosure will be described in more detail so that those skilled in the art to which the present disclosure belongs can easily practice the same, but this is merely an illustration, and the scope of rights of the present disclosure is not limited by the following contents.

As used herein, the term "include" is used when listing materials, compositions, devices, and methods useful in the present disclosure, and is not limited to the examples listed above.

As used herein, the terms "about" and "substantially" are used to indicate a numerical value or range of degrees or approximations thereto, in consideration of inherent manufacture and material tolerances, and are used to prevent undue exploitation by infringers of the referenced disclosure, where exact or absolute numerical values are mentioned, provided to aid the understanding of the present disclosure.

As used herein, the term "electrochemical device" may refer to a primary battery, a secondary battery, a super capacitor, *etc.*

As used herein, the term "particle size" means D50, which is the particle size corresponding to 50% of the cumulative distribution of the number of particles according to the particle size, unless otherwise specified.

As used herein, "a filmed area" refers to an area which is formed between a polymer binder, which is included in a porous coating layer and exposed to a glass transition temperature or higher and thus does not maintain its original shape, and one or more adjacent polymer binders being physically or chemically linked to the polymer binder.

There is provided a method for manufacturing a separator for an electrochemical device, which includes (S1) preparing a coating slurry comprising a polymer binder, inorganic particles, and a dispersion medium; (S2) heating at least one surface of the porous substrate; and (S3) applying the coating slurry prepared in the step (S1) to at least one surface of the porous substrate heated in the step (S2) to thereby form a porous coating layer. The porous coating layer includes an area, where the polymer binder is filmed, in at least a portion of the surface in contact with the porous substrate.

The step (S3) is performed after steps (S1) and (S2), but the order of steps (S1) and (S2) is not specified. For example, it is possible that the porous substrate may be heated in step (S2) after preparing the coating slurry in the step (S1), and *vice versa*. Additionally, the preparation of the coating slurry in the step (S1) and the heating of a porous substrate in the step (S2) may be performed simultaneously.

The step (S1) is a step of preparing a coating slurry including a polymer binder, inorganic particles, and a dispersion medium. The coating slurry may include an aqueous dispersion medium, a polymer binder, and inorganic particles dispersed in the aqueous dispersion medium.

The aqueous dispersion medium may be one or more selected from the group consisting of water and alcohol having 1 to 5 carbon atoms. For example, the aqueous dispersion medium may be a mixture of water and isopropyl alcohol. The polymer binder can maintain the shape of particles in the aqueous dispersion medium, and the shape of the particles may be spherical, but is not limited thereto. The aqueous dispersion medium may evaporate during or after the coating slurry is applied to at least one surface of a heated porous substrate in the step (S3).

In the method of manufacturing a separator, the polymer binder may be one or more particulate polymer binders selected from the group consisting of an acrylic-based polymer, a fluorine-based polymer, and a hybrid polymer of an acrylic-based polymer and a fluorine-based polymer.

The average particle diameter (D50) of the particulate polymer binder may be 100 nm to 700 nm. In the process of forming a porous coating layer, the polymer binder may migrate in the opposite direction of a porous substrate using the evaporation of the aqueous dispersion medium as a driving force, and may be distributed on the surface of the porous coating layer to thereby provide adhesive strength to electrodes.

When the average particle diameter of the particulate polymer binder is larger than 700 nm, the migration of the polymer binder is hindered, thus resulting in lower adhesive strength to the electrodes. A polymer binder having a larger average particle size has a longer retention time to stay close to the surface of the porous substrate in the step (S3). The filmed area of the porous coating layer formed in the step (S3) may exceed 50 wt% based on the total weight of the porous coating layer. In this case, the air permeability and electrical resistance of the separator increase, and the peel strength becomes high, but the adhesive strength to electrodes becomes low, thus being unable to secure structural stability of the electrochemical device.

When the average particle diameter of the particulate polymer binder is smaller than 100 nm, the polymer binder is densely stacked, and thus the air permeability and ionic conductivity of the separator are rapidly reduced. The polymer binder having a small average particle diameter is active in migration in the opposite direction of the porous substrate in the step (S3). The porous coating layer formed in the step (S3) may have a filmed area of less than 25 wt% based on the total weight of the porous coating layer, and it would not be possible to secure the peel strength of the porous coating layer.

The acrylic-based polymer may impart dry adhesive strength to the porous coating layer. The dry adhesive strength may refer to adhesive strength which includes both the adhesive strength between a porous coating layer and a porous substrate and the adhesive strength between a porous coating layer and adjacent electrodes in a state in which the separator is not impregnated with an electrolyte. The average particle diameter (D50) of the acrylic-based polymer may be 400 nm to 700 nm.

The acrylic-based polymer may be one or more selected from the group consisting of a (co)polymer including an alkyl (meth)acrylate repeat unit having 1 to 18 carbon atoms, a copolymer of butyl acrylate and ethylhexyl acrylate, a copolymer of butyl acrylate and styrene, a copolymer of methyl methacrylate and ethylhexyl acrylate, polyacrylonitrile, and polycyanoacrylate, but is not limited thereto. For example, the acrylic-based polymer may further include a particulate polymer such as acrylonitrile-butadiene-styrene rubber and acrylonitrile-butadiene rubber. Preferably, the acrylic-based polymer may be a copolymer of methyl methacrylate and ethylhexyl acrylate.

The fluorine-based polymer and the hybrid polymer of the acrylic-based polymer and the fluorine-based polymer may impart wet adhesive strength to a porous coating layer. Wet adhesive strength may include an adhesive strength between a porous coating layer and a porous substrate and an adhesive strength between a porous coating layer and adjacent electrodes in a state in which the separator is impregnated with an electrolyte. The average particle diameter (D50) of the fluorine-based polymer may be 100 nm to 500 nm.

The fluorine-based polymer may be a homopolymer of vinylidene fluoride, a copolymer of vinylidene fluoride and other polymerizable monomers, or a mixture of two or more thereof. The other polymerizable monomers that can polymerize with vinylidene fluoride may be one or more selected from the group consisting of tetrafluoroethylene, hexafluoropropylene, trifluoroethylene, chlorofluoroethylene, 1,2-difluoroethylene, perfluoro(methylvinyl)ether, perfluoro(ethylvinyl)ether, perfluoro(propylvinyl)ether, perfluoro(2,2-dimethyl-1,3-dioxole), trichloroethylene, and vinyl fluoride, but are not limited thereto. Preferably, the fluorine-based polymer may be a copolymer of vinylidene fluoride and hexafluoropropylene. The content of vinylidene fluoride and other polymerizable monomers in the fluorine-based polymer may be 1 wt% to 40 wt% based on the total weight of the fluorine-based polymer.

In the hybrid polymer of the acrylic-based polymer and the fluorine-based polymer, the acrylic-based polymer and the fluorine-based polymer may be the same as those described above, respectively. The content of the acrylic-based polymer in the hybrid polymer may be 20 wt% to 40 wt% based on the total weight of the hybrid polymer. Preferably, the hybrid polymer may include an acrylic-based polymer and a fluorine-based polymer in a 3:7 weight ratio.

Preferably, the polymer binder may include an acrylic-based polymer, a fluorine-based polymer, or a hybrid polymer of an acrylic-based polymer and a fluorine-based polymer. For example, the polymer binder may include all of a copolymer of methyl methacrylate and ethylhexyl acrylate, a copolymer of vinylidene fluoride and hexafluoropropylene, and a hybrid polymer thereof, thereby providing excellent dry adhesive strength and wet adhesive strength.

The polymer binder may not maintain its particulate form at a temperature higher than its glass transition temperature ($T_g$) and may be converted into a film form. The glass transition temperature ($T_g$) of the polymer binder may mean the lowest glass transition temperature among non-crystalline polymer binders included in the polymer binder.

For example, when the polymer binder includes an acrylic-based polymer and a fluorine-based polymer, the glass transition temperature ($T_g$) of the polymer binder may be the glass transition temperature of the acrylic-based polymer. The acrylic-based polymer may not maintain a particle shape and thus forms a filmed area at a temperature above the glass transition temperature of a non-crystalline acrylic-based polymer. A crystalline fluorine-based polymer has a melting point relatively higher than the glass transition temperature of the acrylic-based polymer, and may maintain a particle shape below the melting point.

For example, when the polymer binder includes two or more acrylic-based polymers, the glass transition temperature ($T_g$) of the polymer binder may be the glass transition temperature of an acrylic-based polymer having a relatively low glass transition temperature.

Preferably, the polymer binder may include an acrylic-based polymer or a hybrid polymer of an acrylic-based polymer and a fluorine-based polymer. The glass transition temperature ($T_g$) of the polymer binder may be higher than room temperature (25°C).

The inorganic particles may be inorganic nanoparticles having an average particle diameter (D50) of 300 nm to 700 nm, preferably 300 nm to 500 nm. The inorganic particles may be connected to and fixed to adjacent inorganic particles by a binder polymer, and an interstitial volume between inorganic particles may form pores of a porous coating layer. When the average particle diameter of the inorganic particles is within the above range, uniform pores may be formed in the separator. A separator with more uniform pores facilitates the migration of lithium ions and increases the impregnation rate with an electrolyte, thereby contributing to an improvement of battery performance.

The inorganic particles may form a uniform thickness of the porous coating layer and may not cause an oxidation-reduction reaction within the range of the operating voltage of an electrochemical device to which it is applied. For example, the inorganic particles may have one or more characteristics of an ability to transfer lithium ions, piezoelectricity, and flame retardancy.

The inorganic particle capable of transferring lithium ions means that it includes a lithium element but does not store lithium and has the function of transporting lithium ions. The inorganic particle capable of transferring lithium ions can transfer and transport lithium ions due to a kind of defect that is present inside the particle structure. Therefore, the lithium ion conductivity in an electrochemical device is improved, and thus, it is possible to promote the improvement of the performance of an electrochemical device.

For example, an inorganic particle capable of transferring lithium ions may be one or more selected from the group consisting of $Li_3PO_4$, $Li_xTi_y(PO_4)_3$ ($0<x<2$, $0<y<3$), $Li_xAl_yTi_z(PO_4)_3$ ($0<x<2$, $0<y<1$, $0<z<3$), $Li_xLa_yTiO_3$ ($0<x<2$, $0<y<3$), $Li_xGe_yP_zS_w$ ($0<x<4$, $0<y<1$, $0<z<1$, $0<w<5$), and lithium nitride ($Li_xN_y$, $0<x<4$, $0<y<2$) such as $Li_3N$; $SiS_2$-based glass ($Li_xSi_yS_z$, $0<x<3$, $0<y<2$, $0<z<4$) such as $Li_3PO_4$-$Li_2S$-$SiS_2$; $P_2S_5$-based glass ($Li_xP_yS_z$, $0<x<3$, $0<y<3$, $0<z<7$) such as $LiI$-$Li_2S$-$P_2S_5$; an LLZO-based one such as $Li_7La_3Zr_2O_{12}$; and mixtures thereof, but is not limited thereto.

An inorganic particle with piezoelectricity refers to a material which is an insulator under atmospheric pressure but has properties that conduct electricity due to a change in its internal structure when a certain pressure is applied thereto. The inorganic particle can exhibit high permittivity characteristics with a permittivity constant of 100 or more, and when a certain pressure is applied and thereby tension or compression is applied, an electric charge is generated so that one surface is positively charged and the opposite surface is negatively charged, respectively, thereby generating a potential difference between both surfaces. As for the inorganic particle described above, when an internal short circuit between a positive electrode and a negative electrode occurs due to external impact (*e.g.*, local crush, nail), not only a positive electrode and a negative electrode do not come into direct contact due to the inorganic particles coated on a separator, but also a potential difference occurs within the particles due to the piezoelectricity of the inorganic particles, which then causes a movement of electrons between the positive electrode and the negative electrode (*i.e.*, a fine current flow), thereby promoting a gentle voltage reduction of the electrochemical device and subsequent improvement of safety.

For example, the inorganic particle with piezoelectricity may be one or more selected from the group consisting of $BaTiO_3$, $BaSO_4$, $Pb(Zr,Ti)O_3$ (PZT), $Pb_{1-x}La_xZr_{1-y}Ti_yO_3$ (PLZT)($0<x<1$, $0<y<1$), $Pb(Mg_{1/3}Nb_{2/3})O_3$-$PbTiO_3$ (PMN-PT), $HfO_2$ (hafnia), and mixtures thereof, but is not limited thereto.

The inorganic particle with flame retardancy can add flame retardancy to a separator or prevent the temperature inside an electrochemical device from rapidly rising.

For example, the inorganic particle with flame retardancy may be one or more selected from the group consisting of $Sb_2O_3$, $Sb_2O_4$, $Sb2O_5$, $SrTiO_3$, $SnO_2$, $CeO_2$, $MgO$, $Mg(OH)_2$, $NiO$, $CaO$, $ZnO$, $Zn_2SnO_4$, $ZnSnO_3$, $ZnSn(OH)_6$, $ZrO_2$, $Y_2O_3$, $SiO_2$, $Al_2O_3$, $AlOOH$, $Al(OH)_3$, $SiC$, $TiO_2$, $H_3BO_3$, $HBO_2$, and mixtures thereof, but is not limited thereto.

The coating slurry may include 10 wt% to 30 wt% of solids which includes a polymer binder and inorganic particles relative to the total weight. The porous coating layer formed by the coating slurry may include a polymer binder and inorganic particles in a weight ratio of 1:9 to 9: 1, preferably in a weight ratio of 3:7 to 7:3.

The step (S1) prepares the coating slurry at a temperature ($T_S$) higher than room temperature (25°C) and lower than the glass transition temperature ($T_g$) of the polymer binder. For example, a polymer binder and inorganic particles may be added to an aqueous dispersion medium and stirred to prepare a coating slurry in which the polymer binder and inorganic particles are uniformly dispersed, and then heated to the above temperature ($T_S$). The polymer binder included in the coating slurry can maintain a particulate form, and in the step (S3) to be described later, when the coating slurry is applied to a porous substrate to form a porous coating layer, an area in which at least a portion of the polymer binder is filmed can be formed.

The step (S2) is a step of heating at least one surface of a porous substrate to a temperature ($T_P$) higher than the glass transition temperature ($T_g$) of the polymer binder.

The porous substrate can electrically insulate a positive electrode and a negative electrode and provide a path for lithium ions to move while preventing a short circuit due to a contact with the electrodes. For example, the porous substrate may be a polymer film including one or more polymer resins selected from the group consisting of polyolefins such as polyethylene and polypropylene, polyethylene terephthalate, polybutylene terephthalate, polyacetal, polyamide, polycarbonate, polyimide, polyether ether ketone, polyethersulfone, polyphenylene oxide, polyphenylene sulfide, and polyethylene naphthalate, or non-woven fabric, but is not limited thereto. The porous substrate may be made of a single-layer polymer film or non-woven fabric, but is not limited thereto and may consist of a plurality of layers.

The thickness of the porous substrate may be 3 $\mu$m to 50 $\mu$m. When the thickness of the porous substrate is less than 3 $\mu$m, the mechanical properties of the separator to be manufactured may deteriorate, and thus, the separator may be easily damaged. The size of the pores present in the porous substrate may be 0.01 $\mu$m to 50 $\mu$m, and the porosity may be 10 vol% to 90 vol%, but is not limited thereto.

In the step (S2), at least one surface of a porous substrate may be heated using, e.g., a heater in which the temperature may be lower than the melting point ($T_m$) of the porous substrate. For example, when the porous substrate is polyethylene (a melting point of about 107°C), in the step (S2), both sides of the porous substrate may be heated to a temperature ($T_P$) higher than about 40°C to 60°C ($T_g$) but lower than about 107°C ($T_m$).

In the step (S2), only a portion of at least one surface of the porous substrate may be heated. In this case, it is possible to prevent a phenomenon in which air permeability and ionic conductivity of a porous coating layer decrease due to excessive film formation by controlling the area where the polymer binder is filmed according to the application of the coating slurry in step (S3) to be described later. For example, in the step (S2), one or more areas may be heated among an area extending from the edge of the one surface by a predetermined thickness, a checkerboard-shaped area formed on the one surface, and a pattern area in which the same shape is repeatedly formed on the one surface. The pattern area may include a polygon (*e.g.,* a circle, an ellipse, a triangle, a quadrangle), a linear or irregular shape (*e.g.,* a dotted line, a solid line), but is not limited thereto.

The step (S3) is a step to apply the coating slurry prepared in the step (S1) to at least one surface of the porous substrate heated in the step (S2) to thereby form a porous coating layer.

The coating slurry may be applied to the porous substrate by one or more methods selected from the group consisting of dip coating, die coating, bar coating, roll coating, and comma coating. but the method is not limited thereto.

The coating slurry may be heated to a glass transition temperature ($T_g$) or higher due to the heat being conducted while the coating slurry is brought into contact with a surface of a porous substrate heated to a temperature ($T_p$) higher than the glass transition temperature ($T_g$) of the polymer binder. At least a portion of the polymer binder included in the coating slurry does not maintain a particulate form and forms an area in which the polymer binder is filmed in the porous coating layer. The filmed area improves the adhesive strength between the porous coating layer and the porous substrate, and the adhesive strength may be expressed as peel strength. A separator for an electrochemical device including a porous coating layer on which a filmed area is formed may have a peel strength of about 50 gf/20 mm to about 80 gf/20 mm. When the peel strength of the separator is lower than 50 gf/20 mm, damage may occur to the separator during the manufacture of an electrode assembly and the use of an electrochemical device.

Although the coating slurry is heated to a relatively low temperature ($T_S$) and a porous substrate is heated to a relatively high temperature ($T_P$) based on the glass transition temperature ($T_g$) of the polymer binder included in a porous coating layer, when these temperatures satisfy the following Equation (1), peel strength that belongs to the above range can be obtained:

$$\text{Equation (1)}$$

$$T_P - T_g \geq T_g - T_S.$$

For example, the porous substrate may be heated to a temperature ($T_P$) 10°C to 30°C higher than the glass transition temperature ($T_g$) of the polymer binder, and the coating slurry may be heated to a temperature ($T_S$), which is 5°C to 10°C lower than the glass transition temperature ($T_g$) of the polymer binder. Preferably, the porous substrate may be heated to a temperature ($T_P$), which is 10°C to 20°C higher than the glass transition temperature ($T_g$) of the polymer binder.

The porous coating layer formed in the step (S3) may be an area in which 25 wt% to 50 wt% is filmed based on the total weight of the porous coating layer. Since when the thermal energy of the porous substrate is conducted to the porous coating layer, part of the thermal energy is released to the outside of the separator and is lost, and thus the filmed area may be formed only on a portion in a thickness direction of the porous coating layer.

The step (S3) may include drying the porous substrate coated with the coating slurry at a temperature of 50°C to 70°C for 5 to 10 minutes. A portion of the dispersion medium included in the coating slurry remains even after being applied onto the porous substrate, and may be removed through the drying step. Preferably, in the step (S3), the drying step may be repeated 5 or more times.

In the step (S3), some of the polymer binders included in the coating slurry may be filmed on the surface in contact with the porous substrate, and others may move in an opposite direction from the surface in contact with the porous substrate. The polymer binder may move toward the surface of the porous coating layer in the step of applying and drying the coating slurry. In this embodiment, compared to the conventional method, the transfer of the polymer can easily be facilitated by heating a porous substrate to the temperature ($T_P$) or by applying a coating slurry prepared at the temperature ($T_S$) to a porous substrate heated to the temperature ($T_P$).

After a porous coating layer is formed, the porous coating layer may include a filmed area of 25 wt% to 50 wt% based on the total weight of the porous coating layer on a portion having a thickness of 50% or less from the surface being in contact with the porous substrate. Preferably, the porous coating layer may include a filmed area of 30 wt% to 50 wt% based on the total weight of the porous coating layer on a portion of 50% or less from the surface being in contact with the porous substrate. Although the porous coating layer includes a relatively small amount of a polymer binder on the side being in contact with the porous substrate, the polymer binder may be filmed to provide adhesive strength with the porous substrate, and the surface opposite to the porous substrate includes a relatively large amount of a particulate polymer binder to thereby ensure adhesive strength with the electrodes. A separator for an electrochemical device having a polymer binder distribution as described above may have an electrode adhesive strength of about 70 gf/20 mm to about 90 gf/20 mm. When the adhesive strength of the separator to the electrodes is lower than 70 gf/20 mm, it is not possible to manufacture an electrode assembly by attaching the electrodes and the separator.

The thickness of the porous coating layer may be 1 $\mu$m to 20 $\mu$m. Preferably, the thickness of the porous coating layer may be 2 $\mu$m to 10 $\mu$m.

Hereinafter, embodiments of the present disclosure will be described in detail with reference to the accompanying drawings, and the descriptions which are the same as in the previous embodiments are replaced by the descriptions of these embodiments.

FIG. 1 is a conceptual diagram illustrating a process of manufacturing a separator for an electrochemical device 1 according to an embodiment of the present disclosure using a device for manufacturing a separator 100.

Referring to FIG. 1, the device for manufacturing a separator 100 may include a porous substrate supply roll 110, a heater 120, a slurry supply unit 130, a drying oven 140, and a winding roll 150.

A porous substrate 10 may be provided in a state wound around the porous substrate supply roll 110 and supplied to the device for manufacturing a separator 100 in a sheet form.

The porous substrate 10 is supplied to a heater 120 capable of heating at least one surface. The heater 120 may form a heating zone on at least a portion of the target surface of the porous substrate 10 and heat the heating zone to a predetermined temperature $T_P$. The heated porous substrate 10 is supplied to the slurry supply unit 130.

The slurry supply unit 130 may include a slurry storage unit 131, a slurry heating unit 132, a coating slurry 133 to be accommodated in the slurry storage unit 131, a slurry application unit 134. The slurry storage unit 131 provides a space for storing the coating slurry 133, but is not limited thereto. The polymer binder, inorganic particles, and dispersion medium may be supplied to and stirred in the slurry storage unit 131 to form the coating slurry 133, and the slurry heating unit 132 can heat the coating slurry 133 to a predetermined temperature ($T_S$). The heated coating slurry 133 may be applied to at least one surface of the porous substrate 10 through the slurry application unit 134. The slurry application unit 134 may be a die, bar, or roll, depending on the coating method. The porous substrate coated with a coating slurry is supplied to the drying oven 140.

The drying oven 140 can dry the porous substrate coated with a coating slurry for a predetermined temperature and time to thereby form a porous coating layer. The drying oven 140 may repeat the drying step two or more times under the same or different conditions, and preferably may repeat the drying step five or more times. The manufactured separator 1 is supplied to the winding roll 150.

The electrochemical device according to another aspect of the disclosure includes a positive electrode, a negative electrode, and a separator interposed between the positive electrode and the negative electrode. For example, the electrochemical device may be a lithium secondary battery including a positive electrode that provides lithium ions.

The positive electrode and the negative electrode may be obtained by applying and drying an active material on at least one surface of each current collector. As for the current collector, a material having conductivity without causing a chemical change in an electrochemical device may be used. For example, a current collector for a positive electrode may be aluminum, nickel, titanium, baked carbon, or stainless steel, or one in which the surface of aluminum or stainless steel is treated with carbon, nickel, titanium, and silver, but is not limited thereto. For example, a current collector for a negative electrode may be copper, nickel, titanium, baked carbon, stainless steel, or one in which the surface of copper or stainless steel is treated with carbon, nickel, titanium, and silver, but is not limited thereto. The current collector may be in various forms such as a thin metal plate, a film, a foil, a net, a porous body, and a foam body.

For example, a positive electrode active material may include lithium cobalt oxide ($LiCoO_2$); lithium nickel oxide ($LiNiO_2$); lithium manganese oxide represented by the following chemical formula $Li_{1+x}Mn_{2-x}O_4$ (wherein x is 0 to 0.33): $LiMnO_3$, $LiMn_2O_3$, and $LiMnO_2$; lithium copper oxide ($Li_2CuO_2$); vanadium oxide such as $LiV_3O_8$, $LiFe_3O_4$, $V_2O_5$, and $Cu_2V_2O_7$; Ni site type lithium nickel oxide represented by the following chemical formula $LiNi_{1-x}M_xO_2$ (wherein M = Co, Mn, Al, Cu, Fe, Mg, B, or Ga, and x = 0.01 to 0.3); lithium manganese composite oxide represented by the following chemical formula $LiMn_{2-x}M_xO_2$ (wherein M = Co, Ni, Fe, Cr, Zn, or Ta, x = 0.01 to 0.1) or $Li_2Mn_3MO_8$ (wherein M = Fe, Co, Ni, Cu, or Zn); $LiMn_2O_4$ wherein part of Li of the formula is substituted with an alkaline earth metal ion; disulfide compounds; or $Fe_2(MoO_4)_3$, but is not limited thereto.

A negative electrode active material may include carbon such as non-graphitic carbon and graphitic carbon; metal composite oxide such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Groups 1, 2, and 3 elements in the periodic table, halogens; $0 < x \leq 1$; $1 \leq y \leq 3$; $1 \leq z \leq 8$); lithium metals; lithium alloys; silicon-based alloys; tin-based alloys; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; conductive polymers such as polyacetylene; or Li-Co-Ni-based materials, but is not limited thereto.

The electrolyte may be a non-aqueous electrolyte including a lithium salt. The electrolyte may consist of an electrolyte and a lithium salt, and as the electrolyte, a non-aqueous organic solvent, an organic solid electrolyte, or an inorganic solid electrolyte, may be used.

As the non-aqueous organic solvent, aprotic organic solvents, for example, N-methyl-2-pyrrolidinone, propylene carbonate, ethylene carbonate, butylene carbonate, dimethyl carbonate, diethyl carbonate, gamma-butylolactone, 1,2-dimethoxy ethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate may be used.

As the organic solid electrolyte, for example, polyethylene derivatives, polyethylene oxide derivatives, polypropylene oxide derivatives, phosphoric acid ester polymers, polyagitation lysine, polyester sulfide, polyvinyl alcohol, polyvinylidene fluoride, and polymers including ionic dissociation groups may be used.

As the inorganic solid electrolyte, nitride, halide, sulfate, *etc.* of Li, for example, $Li_3N$, $LiI$, $Li_5NI_2$, $Li_3NLiI$-$LiOH$, $LiSiO_4$, $LiSiO_4$-$LiI$-$LiOH$, $Li_2SiS_3$, $Li_4SiO_4$, $Li_4SiO_4$-$LiI$-$LiOH$, and $Li_3PO_4$-$Li_2S$-$SiS_2$ may be used.

The lithium salt is a material that is easily soluble in the non-aqueous electrolyte, and for example, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborane, lower aliphatic carboxylic acid lithium, lithium 4-phenyl borate, and imide may be used.

The electrochemical device may be manufactured by inserting a positive electrode, a negative electrode, a separator, and an electrolyte into a case or pouch and sealing the same. The shape of the case or pouch is not limited. For example, the electrochemical device may be a cylindrical type, a prismatic type, a coin type, or a pouch type lithium secondary battery.

The lithium secondary battery is a unit cell, and as a pack or being modularized, may be used for small devices such as computers, mobile phones, and power tools and power tools powered by an battery motor; electric vehicles including electric vehicles (EVs), hybrid electric vehicles (HEVs), and plug-in hybrid electric vehicles (PHEVs); electric two-wheeled vehicles including electric bicycles (E-bikes) and electric scooters (E-scooters); electric golf carts; and medium to large devices such as power storage systems.

Hereinafter, the present disclosure will be described in more detail through specific Examples and Experimental Examples. The following Examples and Experimental Examples are for illustrating the present disclosure, and the present disclosure is not limited by the following Examples and Experimental Examples.

**Example 1**

Preparation of coating slurry

100 mL of an aqueous dispersion medium was prepared by mixing water and isopropyl alcohol in a weight ratio of 95:5 at room temperature (25°C). 11.7 g of styrene-acryl (particle diameter: 350 nm to 400 nm, $T_g$: 40°C) as an acrylic-based polymer binder, 8.2 g of PVDF-HFP (particle diameter: 250 nm, $T_g$: -40°C) as a fluorine-based polymer binder, 27.615 g of $Al_2O_3$ (particle diameter: 400 nm) as an inorganic particle were injected to the aqueous dispersion medium, and the mixture was stirred for 60 minutes with a shaker to prepare a coating slurry in which a polymer binder and inorganic particles were dispersed. The coating slurry was heated to 35°C.

Preparation of porous substrate

As a porous substrate, a polyethylene film (MI: 0.2 g/10 min, Tm: 135°C, porosity: 45%, average pore size: 45 nm) having a size of 20 cm × 30 cm and a thickness of 9 μm was used. The polyethylene film was placed in an oven and heated to a surface temperature of 50°C on both sides.

Preparation of separator

A porous coating layer having a thickness of 2 μm was formed by coating both sides of the coating slurry heated to 35°C on a polyethylene film heated to 50°C using a bar coater.

A separator having a total thickness of 13 μm was prepared by repeating 5 times the process of drying a polyethylene film, on which a porous coating layer was formed, by applying a low-temperature air volume.

**Comparative Example 1**

A separator was prepared in the same manner as in Example 1, except that the coating slurry and the porous substrate were not heated, respectively.

**Comparative Example 2**

A separator was prepared in the same manner as in Example 1, except that the coating slurry was not heated.

**Comparative Example 3**

A separator was prepared in the same manner as in Example 1, except that the porous substrate was not heated.

**Comparative Example 4**

A separator was prepared in the same manner as in Example 1, except that the coating slurry was heated to 45°C.

**Comparative Example 5**

A separator was prepared in the same manner as in Example 1, except that an acrylic-based polymer binder and a fluorine-based polymer binder with a particle size of 50 nm or more and less than 100 nm, respectively, were used.

**Comparative Example 6**

A separator was prepared in the same manner as in Example 1, except that an acrylic-based polymer binder and a fluorine-based polymer binder with a particle size of 750 nm to 1,000 nm, respectively, were used.

**Experimental Example 1. Confirmation of distribution of filmed areas**

The distribution of filmed areas in a porous coating layer was confirmed by repeating the tape peeling experiment on one side of the separators of Examples and Comparative Examples. Among the polymer binders included in a porous coating layer, the filmed polymer binders were not removed by the tape peeling experiment, and only the polymer binders that maintained their particulate form could be attached to the tape.

Each separator sample was prepared in a size of 5 cm $\times$ 5 cm, and the initial weight ($L_{ini}$) was measured. A tape (3 M) was attached to one side of each separator sample, and the end of the tape was peeled off at a speed of 300 mm/min in a direction of 180° with respect to the direction of attachment using the Universal Testing Machine (UTM, Instron) 3 times, and the weight ($L_p$) of each separator was measured.

After peeling off the tape 3 times, the value obtained by subtracting the weight ($L_b$) of a fabric from the weight ($L_p$) of a separator (the weight of filmed areas in a porous coating layer; $L_p - L_b$) was calculated as the ratio (a filming ratio, %) relative to the weight of a porous coating layer ($L_{ini} - L_b$), and the results are shown in Table 1 below.

[Table 1]

|  | Example 1 | Comparative Example 1 | Comparative Example 2 | Comparative Example 3 | Comparative Example 4 | Comparative Example 5 | Comparative Example 6 |
|---|---|---|---|---|---|---|---|
| Slurry Heating Temperat ure (°C) | 35 | $\times$ | $\times$ | 35 | 45 | 35 | 35 |
| Porous Substrate Heating Temperat ure (°C) | 50 | $\times$ | 50 | $\times$ | 50 | 50 | 50 |
| Filming Ratio (%) | 31 | 1 | 18 | 8 | 100 | 21 | 69 |

**Experimental Example 1. Confirmation of physical properties of separators**

The air permeability of the separators of Examples and Comparative Examples, the adhesive strength (peel strength) between a porous substrate and a porous coating layer in each separator, and the adhesive strength (lami strength) of each separator to electrodes was confirmed and the results are shown in Table 2 below.

Measurement of Air Permeability

For air permeability, the time required for 100 cc of air to pass through a separator with a diameter of 28.6 mm and an area of 645 mm$^2$ was measured using a Gurley densometer (Gurley, 4110N).

Measurement of Peel Strength

Each separator was sampled to have a width of 20 mm and attached the same to a slide glass using a double-sided tape (3M) with a width of 18 mm to prepare a sample for a test.

Peel strength was measured while detaching the slide glass from the separator using UTM at a speed of 300 mm/min in a direction of 180° with respect to the direction of attachment.

Measurement of electrode-separator adhesive strength

After mixing a negative electrode active material (in a weight ratio of 5:5 between natural graphite and artificial graphite), a conductive material (super P), and a binder (polyvinylidene fluoride (PVdF)) in a weight ratio of 92:2:6, the mixture was dispersed in water and then coated on a copper foil to thereby prepare a negative electrode.

The separators and negative electrodes of Examples and Comparative Examples were each sampled to have a width of 20 mm and stacked, and then pressed at 60°C at a pressure of 6.5 MPa for 1 second to thereby prepare samples for the test of their adhesive strength to the electrode.

The adhesive strength of each separator to the electrode was measured while detaching the negative electrode from the separator using UTM at a speed of 300 mm/min in a direction of 180° with respect to the direction of attachment.

[Table 2]

| Category | Air Permeability (sec/100 cc) | ER (Ohm) | Peel Strength (gf/20 mm) | Electrode-Separator Adhesive Strength (gf/20 mm) |
|---|---|---|---|---|
| Example 1 | 91 | 0.65 | 101 | 96 |
| Comparative Example 1 | 65 | 0.49 | 5 | 11 |
| Comparative Example 2 | 83 | 0.58 | 31 | 38 |
| Comparative Example 3 | 71 | 0.52 | 19 | 24 |
| Comparative Example 4 | 347 | 2.07 | 294 | 3 |
| Comparative Example 5 | 66 | 0.50 | 7 | 10 |
| Comparative Example 6 | 123 | 0.88 | 239 | 3 |

[Detailed Description of Main Elements]

| | | | |
|---|---|---|---|
| 1: | separator for electrochemical device | 10: | porous substrate |
| 100: | device for manufacturing separator | | |
| 110: | porous substrate supply roll | | |
| 120: | heater | 130: | slurry supply unit |
| 131: | slurry storage unit | 132: | slurry heating unit |
| 133: | coating slurry | 134: | slurry application unit |
| 140: | drying oven | 150: | winding roll |

**Claims**

1. A method for manufacturing a separator (1) for an electrochemical device, comprising:

(S1) preparing a coating slurry (133) comprising a polymer binder, inorganic particles, and a dispersion medium;
(S2) heating at least one surface of a porous substrate (10); and
(S3) applying the coating slurry prepared in the step (S1) onto at least one surface of the porous substrate (10) heated in the step (S2) to thereby form a porous coating layer;
wherein the porous coating layer comprises an area, where the polymer binder is filmed, in at least a portion of the surface in contact with the porous substrate;

in the step (S1), the coating slurry (133) is prepared at a temperature ($T_S$) higher than room temperature (25°C) and lower than the glass transition temperature ($T_g$) of the polymer binder; and

in the step (S2), the porous substrate (10) is heated to a temperature ($T_P$) higher than the glass transition temperature ($T_g$) of the polymer binder.

2. The method of claim 1, wherein the method satisfies the following Equation (1):

$$\text{Equation (1)}$$

$$T_P - T_g \geq T_g - T_S.$$

3. The method of claim 1, wherein in the step (S2), the porous substrate (10) is heated below the melting point ($T_m$) of the porous substrate.

4. The method of claim 1, wherein the area where the polymer binder is filmed is 25 wt% to 50 wt% relative to the total weight of the porous coating layer.

5. The method of claim 1, wherein the thickness of the porous coating layer is 1 $\mu$m to 20 $\mu$m.

6. The method of claim 1, wherein in the step (S2), only a portion of at least one surface of the porous substrate (10) is heated, and one or more areas are heated among an area extending from an edge of the surface, a checkerboard-shaped area on the surface, and a pattern area where the same shape is repeatedly formed on the surface.

7. The method of claim 1, wherein the step (S3) comprises drying the porous substrate (10), on which the coating slurry (133) is applied, at a temperature of 50°C to 70°C for 5 to 10 minutes.

8. The method of claim 7, wherein in the step (S3), the drying step is repeated 5 or more times.

9. The method of claim 1, wherein the polymer binder is one or more particulate polymer binders selected from an acrylic-based polymer, a fluorine-based polymer, and a hybrid polymer of an acrylic-based polymer and a fluorine-based polymer.

10. The method of claim 9, wherein the fluorine-based polymer is a homopolymer of vinylidene fluoride, a copolymer of vinylidene fluoride and a different polymerizable monomer, or a mixture of two or more thereof.

11. The method of claim 9, wherein the polymer binder comprises an acrylic-based polymer, a fluorine-based polymer, and a hybrid polymer of an acrylic-based polymer and a fluorine-based polymer.

12. A separator for an electrochemical device, the separator comprising

a porous substrate; and
a porous coating layer on at least one surface of the porous substrate, the porous coating layer comprising a polymer binder and inorganic particles;
wherein the porous coating layer comprises an area, where the polymer binder is filmed, in at least a portion of the surface in contact with the porous substrate;
the area where the polymer binder is filmed is 25 wt% to 50 wt% relative to the total weight of the porous coating layer; and
the polymer binder is one or more particulate polymer binders selected from an acrylic-based polymer, a fluorine-based polymer, and a hybrid polymer of an acrylic-based polymer and a fluorine-based polymer.

13. An electrochemical device comprising a positive electrode, a negative electrode, and a separator interposed between the positive electrode and the negative electrode, wherein the separator is a separator according to claim 12.

14. The electrochemical device of claim 13, which is a lithium secondary battery.

**Patentansprüche**

1. Verfahren zur Herstellung eines Separators (1) für eine elektrochemische Vorrichtung, umfassend:

   (S1) Herstellen einer Beschichtungsaufschlämmung (133), die ein Bindemittelpolymer, anorganische Partikel und ein Dispersionsmedium umfasst;
   (S2) Erhitzen von mindestens einer Oberfläche eines porösen Substrats (10); und,
   (S3) Aufbringen der in dem Schritt (S1) hergestellten Beschichtungsaufschlämmung auf mindestens eine Oberfläche des in dem Schritt (S2) erhitzten porösen Substrats (10), um dadurch eine poröse Beschichtungsschicht zu bilden;
   wobei die poröse Beschichtungsschicht in mindestens einem Abschnitt der Oberfläche, die mit dem porösen Substrat in Kontakt steht, einen Bereich umfasst, in dem das Bindemittelpolymer in Form eines Films vorliegt;
   in dem Schritt (S1) die Beschichtungsaufschlämmung (133) bei einer Temperatur ($T_S$) oberhalb der Raumtemperatur (25 °C) und unterhalb der Glasübergangstemperatur ($T_g$) des Bindemittelpolymers hergestellt wird; und
   in dem Schritt (S2) das poröse Substrat (10) auf eine Temperatur ($T_P$) oberhalb der Glasübergangstemperatur ($T_g$) des Bindemittelpolymers erhitzt wird.

2. Verfahren nach Anspruch 1, wobei das Verfahren die folgende Gleichung (1) erfüllt:

$$\text{Gleichung (1)}$$

$$T_P - T_g \geq T_g - T_S.$$

3. Verfahren nach Anspruch 1, wobei in dem Schritt (S2) das poröse Substrat (10) unterhalb des Schmelzpunkts ($T_m$) des porösen Substrats erhitzt wird.

4. Verfahren nach Anspruch 1, wobei der Bereich, in dem das Bindemittelpolymer in Form eines Films vorliegt, 25 Gew.- % bis 50 Gew.-% relativ zum Gesamtgewicht der porösen Beschichtungsschicht beträgt.

5. Verfahren nach Anspruch 1, wobei die Dicke der porösen Beschichtungsschicht 1 $\mu$m bis 20 $\mu$m beträgt.

6. Verfahren nach Anspruch 1, wobei in dem Schritt (S2) nur ein Abschnitt von mindestens einer Oberfläche des porösen Substrats (10) erhitzt wird, und ein oder mehrere Bereiche unter einem Bereich, der sich von einer Kante der Oberfläche erstreckt, einem schachbrettförmigen Bereich auf der Oberfläche und einem Musterbereich, in dem dieselbe Form wiederholt auf der Oberfläche gebildet ist, erhitzt werden.

7. Verfahren nach Anspruch 1, wobei der Schritt (S3) das Trocknen des porösen Substrats (10), auf das die Beschichtungsaufschlämmung (133) aufgebracht ist, bei einer Temperatur von 50 °C bis 70 °C für 5 bis 10 Minuten umfasst.

8. Verfahren nach Anspruch 7, wobei in dem Schritt (S3) der Trocknungsschritt 5-mal oder häufiger wiederholt wird.

9. Verfahren nach Anspruch 1, wobei das Bindemittelpolymer mindestens ein partikuläres Bindemittelpolymer ist, ausgewählt aus einem Acrylpolymer, einem Fluorpolymer und einem Hybridpolymer aus einem Acrylpolymer und einem Fluorpolymer.

10. Verfahren nach Anspruch 9, wobei das Fluorpolymer ein Homopolymer aus Vinylidenfluorid, ein Copolymer aus Vinylidenfluorid und einem anderen polymerisierbaren Monomer oder eine Mischung aus zwei oder mehr davon ist.

11. Verfahren nach Anspruch 9, wobei das Bindemittelpolymer ein Acrylpolymer, ein Fluorpolymer und ein Hybridpolymer aus einem Acrylpolymer und einem Fluorpolymer umfasst.

12. Separator für eine elektrochemische Vorrichtung, der Separator umfassend

    ein poröses Substrat; und
    eine poröse Beschichtungsschicht auf mindestens einer Oberfläche des porösen Substrats, wobei die poröse Beschichtungsschicht ein Bindemittelpolymer und anorganische Partikel umfasst;

wobei die poröse Beschichtungsschicht in mindestens einem Abschnitt der Oberfläche, die mit dem porösen Substrat in Kontakt steht, einen Bereich umfasst, in dem das Bindemittelpolymer in Form eines Films vorliegt; der Bereich, in dem das Bindemittelpolymer in Form eines Films vorliegt, 25 Gew.-% bis 50 Gew.-% relativ zum Gesamtgewicht der porösen Beschichtungsschicht beträgt; und das Bindemittelpolymer mindestens ein partikuläres Bindemittelpolymer ist, ausgewählt aus einem Acrylpolymer, einem Fluorpolymer und einem Hybridpolymer aus einem Acrylpolymer und einem Fluorpolymer.

13. Elektrochemische Vorrichtung, umfassend eine positive Elektrode, eine negative Elektrode und einen zwischen der positiven Elektrode und der negativen Elektrode eingefügten Separator, wobei der Separator ein Separator nach Anspruch 12 ist.

14. Elektrochemische Vorrichtung nach Anspruch 13, wobei es sich um eine Lithiumsekundärbatterie handelt.

**Revendications**

1. Procédé de fabrication d'un séparateur (1) de dispositif électrochimique, comprenant :

(S1) la préparation d'une bouillie de revêtement (133) comprenant un liant polymère, des particules inorganiques, et un milieu de dispersion ;
(S2) le chauffage d'au moins une surface d'un substrat poreux (10) ; et
(S3) l'application de la bouillie de revêtement préparée à l'étape (S1) sur au moins une surface du substrat poreux (10) chauffé à l'étape (S2) pour ainsi former une couche de revêtement poreuse ;
dans lequel la couche de revêtement poreuse comprend une zone, où le liant polymère est disposé en film, dans au moins une partie de la surface en contact avec le substrat poreux ;
à l'étape (S1), la bouillie de revêtement (133) est préparée à une température ($T_S$) supérieure à la température ambiante (25 °C) et inférieure à la température de transition vitreuse ($T_g$) du liant polymère ; et
à l'étape (S2), le substrat poreux (10) est chauffé à une température ($T_P$) supérieure à la température de transition vitreuse ($T_g$) du liant polymère.

2. Procédé selon la revendication 1, dans lequel le procédé satisfait à l'Équation (1) suivante :

$$\text{Équation (1)}$$

$$T_P - T_g \geq T_g - T_S.$$

3. Procédé selon la revendication 1, dans lequel, à l'étape (S2), le substrat poreux (10) est chauffé en dessous du point de fusion ($T_m$) du substrat poreux.

4. Procédé selon la revendication 1, dans lequel la zone où le liant polymère est disposé en film est de 25 % en poids à 50 % en poids par rapport au poids total de la couche de revêtement poreuse.

5. Procédé selon la revendication 1, dans lequel l'épaisseur de la couche de revêtement poreuse est comprise entre 1 $\mu$m et 20 $\mu$m.

6. Procédé selon la revendication 1, dans lequel, à l'étape (S2), seulement une partie d'au moins une surface du substrat poreux (10) est chauffée, et une ou plusieurs zones sont chauffées parmi une zone s'étendant à partir d'un bord de la surface, une zone en forme de damier sur la surface, et une zone de motif où la même forme est formée de façon répétée sur la surface.

7. Procédé selon la revendication 1, dans lequel l'étape (S3) comprend le séchage du substrat poreux (10), sur lequel la bouillie de revêtement (133) est appliquée, à une température comprise entre 50 °C et 70 °C pendant 5 à 10 minutes.

8. Procédé selon la revendication 7, dans lequel, à l'étape (S3), l'étape de séchage est répétée 5 fois ou plus.

9. Procédé selon la revendication 1, dans lequel le liant polymère est un ou plusieurs liants polymères particulaires choisis parmi un polymère à base d'acrylique, un polymère à base de fluor, et un polymère hybride d'un polymère à base d'acrylique et d'un polymère à base de fluor.

10. Procédé selon la revendication 9, dans lequel le polymère à base de fluor est un homopolymère de fluorure de vinylidène, un copolymère de fluorure de vinylidène et un monomère polymérisable différent, ou un mélange de deux ou plus de ceux-ci.

11. Procédé selon la revendication 9, dans lequel le liant polymère comprend un polymère à base d'acrylique, un polymère à base de fluor, et un polymère hybride d'un polymère à base d'acrylique et d'un polymère à base de fluor.

12. Séparateur de dispositif électrochimique, le séparateur comprenant

un substrat poreux ; et
une couche de revêtement poreuse sur au moins une surface du substrat poreux, la couche de revêtement poreuse comprenant un liant polymère et des particules inorganiques ;
dans lequel la couche de revêtement poreuse comprend une zone, où le liant polymère est disposé en film, dans au moins une partie de la surface en contact avec le substrat poreux ;
la zone où le liant polymère est disposé en film est de 25 % en poids à 50 % en poids par rapport au poids total de la couche de revêtement poreuse ; et
le liant polymère est un ou plusieurs liants polymères particulaires choisis parmi un polymère à base d'acrylique, un polymère à base de fluor, et un polymère hybride d'un polymère à base d'acrylique et d'un polymère à base de fluor.

13. Dispositif électrochimique comprenant une électrode positive, une électrode négative, et un séparateur interposé entre l'électrode positive et l'électrode négative, dans lequel le séparateur est un séparateur selon la revendication 12.

14. Dispositif électrochimique selon la revendication 13, qui est une batterie secondaire au lithium.

【FIG. 1】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20190110288 A